# EUROPEAN PATENT APPLICATION

(11) **EP 0 913 811 A1**
(43) Date of publication of application: **06.05.1999**
(21) Application number: 98308360.1
(22) Date of filing: 14.10.1998
(51) Int. Cl.: G11B 5/187

(54) **Edge blending for flat tape bearing surface tape heads**

(30) Priority: 28.10.1997 US 958566
(71) Applicant: Hewlett-Packard Company, Palo Alto, California 94304 (US)
(72) Inventor: Poorman, Paul W., Meridian, Idaho 83642 (US)
(74) Representative: Colgan, Stephen James

(57) **Abstract**

A tape head element (45) of a tape head (85) for reading and writing to a tape (65). The tape head element (45) includes a planar tape bearing surface (50), at least one side surface (55), and blended edges (60) between each of the side surfaces (55) and the planar tape bearing surface (50). The edges (60) are blended to allow an air gap (80) between the edges (60) and the tape (65). As the tape (65) passed over the edges (60), the tape (65) gradually comes in contact with the blended edges (60). The gradual contact provides a smooth transition of the tape (65) onto the tape bearing surface (50). The smooth transition reduces the contact pressure at the edges (60).

## Description

### FIELD OF THE INVENTION

This invention relates, in general to, tape drive systems and, more particularly to, a tape head having a flat tape bearing surface and blended edges.

### BACKGROUND OF THE INVENTION

In tape recording devices, there is a delicate balance between head/tape spacing and contact pressure. If the contact pressure is too high, the tape will kink or tear. If the spacing is too great, reading and writing quality suffers.

Normally the tape bearing surfaces of tape recording heads are radiused to allow the tape to drag smoothly across them, thus minimizing the spacing between head and tape for optimal recording performance. However, at high velocities, air is pulled in between the head and tape and the tape begins to "fly." This positive pressure air bearing increases the head/media spacing and degrades recording performance.

A flat Tape Bearing Surface (TBS) has been developed that minimizes the velocity induced increase in head/tape spacing for single element heads. In order to maintain contact between the tape and the TBS, the tape is angled away from the TBS as the tape enters and leaves the TBS. The angle is commonly called a wrap angle. As the tape moves onto the TBS, tape stiffness causes the tape to bulge slightly before coming in contact with the TBS. The bulge creates a vacuum between the tape and the TBS. The vacuum creates an excessively high contact pressure at the edge of the TBS where the tape first comes in contact with the TBS. As the tape leaves the TBS, a bulge is again created causing a high contact pressure at the edge of the TBS. A tape passing over the high contact pressure edges may be damaged.

Accordingly, given the foregoing backgrounds relating to tape heads having flat tape bearing surfaces, objects of the present invention are to provide a curvature on the edge of a flat tape bearing surface for eliminating high contact pressure at the edges of flat tape bearing surfaces.

### SUMMARY OF THE INVENTION

According to principles of the present invention in a preferred embodiment, a tape head has flat tape bearing surfaces with blended edges. The tape head has one or more tape elements. Each element has a planar tape bearing surface, a leading side, and a trailing side. The edges of the planar tape bearing surfaces are blended to allow an air gap between the tape and a leading side of the tape bearing surface. The air gap is sized to allow a small amount of air to be pulled between the tape and the tape bearing surface. The amount of air pulled between the tape and the tape bearing surface is small enough so that spacing between the tape and the tape bearing surface is not increased relative to a tape bearing surface without a blended edge.

According to further principles of the present invention in a preferred embodiment, the blended edge has a depth of between about 150 and about 250 nanometers (nm) and a penetration of between about 20 and about 40 micrometers (µm). A blended edge having a depth and penetration of this size produces an air gap size which reduces contact pressure at the edges of the tape without increasing head/tape spacing.

Other objects, advantages, and capabilities of the present invention will become more apparent as the description proceeds.

### DESCRIPTION OF THE DRAWINGS

Figure 1 is a diagram showing a typical flat tape bearing surface tape head element.

Figure 2 is a diagram showing a tape head element having a flat surface with blended edges.

Figure 3 is a diagram showing a tape head with two elements each having a flat surface with a blended edge.

### DETAILED DESCRIPTION OF THE INVENTION

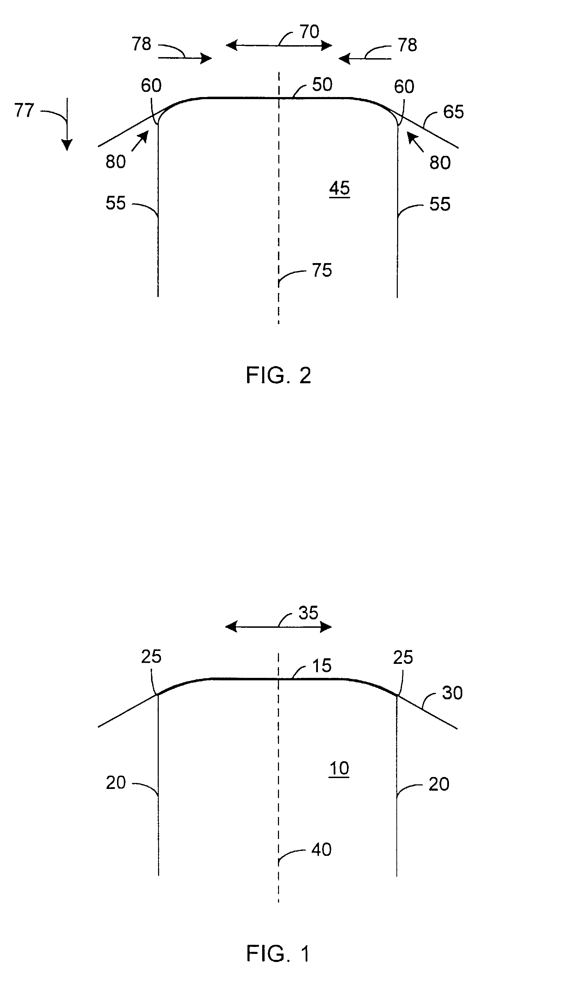

Figure 1 is a cross section diagram of a typical tape head element 10. Tape head element 10 includes a planar tape bearing surface 15, sides 20, and edges 25 between tape bearing surface 15 and sides 20. Tape 30 passes over tape head element 10 in either direction as indicated by arrow 35. Since tape 30 passes in either direction, tape head element 15 is symmetrical about center plane 40.

As tape 30 passes over tape head element 10 many times, planar tape bearing surface 15 is worn to a slight curvature near each edge 25. As tape 30 passes over tape head element 10, both edges 25 are worn due to high contact pressure at each edge 25. Edges 25 remain sharp. Sharp edges 25 cause tape 30 to bulge as tape 30 passes over each edge 25. As explained above, the bulge causes excessively high contact pressure between tape 30 and edge 25.

Figure 2 is a cross section diagram of a preferred embodiment of the present invention tape head element 45. Tape head element 45 includes planar tape bearing surface 50, sides 55, and blended edges 60 between tape bearing surface 50 and sides 55. Tape 65 also passes over tape head element in either direction as indicated by arrow 70. Additionally, tape head element 45 is symmetrical about center plane 75 because tape 65 passes in either direction.

Blended edges 60 are preferably blended to a depth of between about 150 and about 250 nanometers (nm) and a penetration of between about 20 and about 40 micrometers (µm). Depth is measured in the direction 77 along side 55 and penetration is measured in the direction 78 across planar tape bearing surface 50.

Blended edges 60 do not conform to tape 65. Instead, air gaps 80 are formed between blended edges 60 and tape 65. As tape 65 passes onto tape head element 45, tape 65 gradually comes into contact with blended edge 55. The gradual contact provides a smooth transition of angle for tape 65 until tape 65 conforms to tape bearing surface 50. Since the transition is smooth, no bulge is created in tape 65. Since there is no bulge, no high contact pressure region results. The side 55 from which tape 65 passes onto planar tape bearing surface 50 is the leading side. The side 55 from which tape 65 passes off of planar tape bearing surface 50 is the trailing side. As tape 65 passes off of tape head element 45, the slope of tape 65 gradually changes until tape 65 again angles away from planar tape bearing surface 50. Since this change is also gradual, there is no bulge to create a high pressure at edge 60.

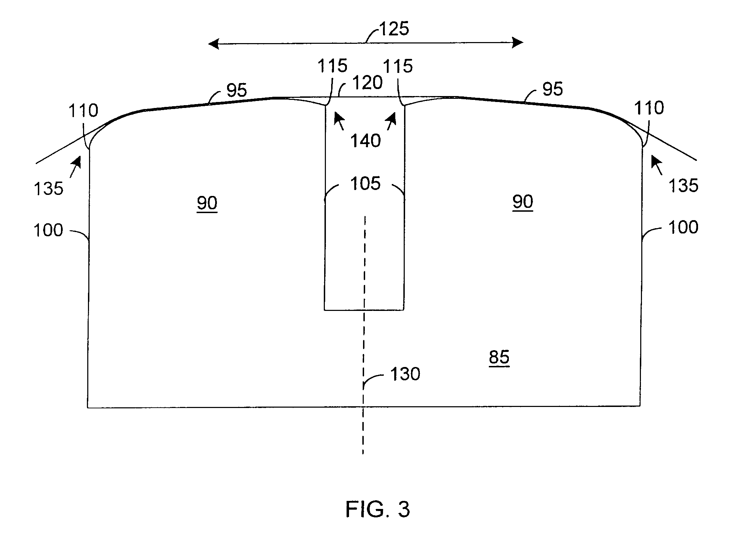

Although Figure 2 illustrates only a single tape head element 45, any number of tape head elements 45 may be combined on a single tape head to produce the present invention. Figure 3 is a cross section of a tape head 85 having two tape head elements 90 of the present invention. Each tape head element 90 includes planar tape bearing surface 95, outer side 100, inner side 105, outer blended edge 110 between tape bearing surface 95 and outer side 100, and inner blended edge 115 between tape bearing surface 95 and inner side 105. Planar tape bearing surfaces 95 are sloped to better hold tape 120 onto surfaces 95. Tape 120 passes in either direction as indicated by arrow 125. Since tape 120 passes in either direction, tape head 85 is symmetrical about center plane 130.

Just as in Figure 2, outer and inner blended edges 110, 115 do not conform to tape 120. Air gaps 135, 140 are formed between leading and trailing blended edges 110, 115 and tape 120. As tape 120 passes over outer edge 110 onto tape head element 90 at outer side 100, the slope of tape 120 gradually changes to conform to tape bearing surface 95. As tape 120 passes over inner edge 115 off of tape bearing surface 95 at inner side 105, the change is again gradual. Outer side 100 is the leading side and inner side 105 is the trailing side. The process is repeated in reverse for the other tape head element 90. Inner side 105 is the leading side and outer side 100 is the trailing side. Since all changes are gradual, no high contact regions are created at edges 110, 115.

In summary, what has been described above are the preferred embodiments for a tape head having flat tape bearing surfaces and blended edges. While the present invention has been described by reference to specific embodiments, it will be obvious that other alternative embodiments and methods of implementation or modification may be employed without departing from the true spirit and scope of the invention.

## Claims

1. A tape head element (45) of a tape head (85) for reading from and writing to a tape (65), the tape head element (45) comprising:
(a) a planar tape bearing surface (50);
(b) at least one side surface (55);
(c) blended edges (60) between each of said side surfaces (55) and said planar tape bearing surface (50); and,
wherein the tape (65) is wrapped around said planar tape bearing surface (50) and said blended edges (60) leaving an air gap (80) formed between said blended edges (60) and the tape (65).

2. The tape head element (45) of claim 1 wherein one of said side surfaces (55) is a leading side surface.

3. The tape head element (45) of claim 1 wherein one of said side surfaces (55) is a trailing side surface.

4. The tape head element (45) of claim 1 wherein said edges (60) are blended to a depth of between about 150 nanometers and about 250 nanometers.

5. The tape head element (45) of claim 1 wherein said edges (60) are blended to a penetration of between about 20 micrometers and about 40 microns.

6. A tape reading and writing system comprising:
(a) a tape (65);
(b) a tape head (85) having at least one tape head element (45), each tape head element (45) including:
(i) a planar tape bearing surface (50);
(ii) at least one side surface (55); and
(iii) blended edges (60) between each of said side surfaces (55) and said planar tape bearing surface (50); and,
wherein said tape (65) is wrapped around each of said planar tape bearing surfaces (50) and said blended edges (60) leaving an air gap (80) formed between said blended edges (60) and said tape (65).

7. The tape reading and writing system of claim 6 wherein one of said side surfaces (55) is a leading side surface.

8. The tape reading and writing system of claim 6 wherein one of said side surfaces (55) is a trailing side surface.

9. The tape head element of claim 6 wherein said edges (60) are blended to a depth of between about 150 nanometers and about 250 nanometers.

10. The tape head element of claim 6 wherein said edges (60) are blended to a penetration of between about 20 micrometers and about 40 micrometers.
